# EUROPÄISCHE PATENTSCHRIFT

(11) **EP 0 695 656 B1**
(45) Veröffentlichungstag und Bekanntmachung des Hinweises auf die Patenterteilung: **15.04.1998**
(21) Anmeldenummer: 95109758.3
(22) Anmeldetag: 23.06.1995
(51) Int. Cl.: B60G 7/00, B60G 21/05

(54) **Hinterachse für ein Kraftfahrzeug**
Rear axle for a motor vehicle
Essieu arrière pour véhicule à moteur

(30) Priorität: 05.08.1994 DE 4427716
(43) Veröffentlichungstag der Anmeldung: 07.02.1996
(73) Patentinhaber: DAIMLER-BENZ AKTIENGESELLSCHAFT, 70567 Stuttgart (DE)
(72) Erfinder: Kleinschmit, Einhard, Dipl.-Ing., D-73732 Esslingen (DE); Huch, Thomas, Dipl.-Ing., D-73061 Ebersbach (DE); Süss, Johann, Dipl.-Ing., D-71404 Korb (DE)

(56) Entgegenhaltungen:
- EP-A- 0 317 727
- DE-A- 2 256 358
- DE-A- 3 001 530
- DE-A- 3 828 828
- US-A- 2 085 662

## Beschreibung

Die Erfindung betrifft eine Hinterachse für ein Kraftfahrzeug gemäß Oberbegriff des Patentanspruches 1.

Aus der gattungsbildenden DE-OS 38 28 828 ist eine Verbundlenker-Hinterachse bekannt, deren beiden Längslenker über eine torsionsweiche Querstrebe miteinander verbunden sind. Zu Abstützung von Seitenkräften ist eine Stützstrebe vorgesehen, die jeweils im radnahen Bereich an einem am Längslenker angeformten Tragzapfen und an ihrem anderen Ende an der die beiden Längslenker miteinander verbindenden Querstrebe angelenkt ist. Der Abstand des radnahen Endes der Stützstrebe zur Längslenkerlängsachse ist dabei kleiner ist als der Abstand des Anlenkpunktes an der Querstrebe zu der Längslenkerlängsachse. Nachteilig bei dieser Hinterachse ist, daß die Stützstrebe mit dem Längslenker und mit der Querstrebe gelenkig verbunden sein muß. Eine gelenkige Anbindung der Stützstrebe sowohl an der Querstrebe als auch am Längslenker ist jedoch mit einem erhöhten Bau-, Fertigungs- und Montageaufwand verbunden.

Aus der DE-OS 30 01 530 ist eine Schräglenkerhinterachse bekannt, welche aus einem mit einem Achsträger starr verbundenen Schräglenker und einer als Federblatt ausgebildeten Längsstrebe gebildet ist, die mit ihrem einen Ende mit dem Achsträger und mit ihrem anderen Ende mit dem Schräglenker starr verbunden ist. Der Achsträger selbst ist über eine Lagerung unelastisch mit dem Aufbau verbunden. Die Ausbildung der Längsstrebe als Federblatt hat zur Folge, daß unter Seitenkrafteinfluß es zu einer Längung der Längsstrebe kommt, was dazu führt, daß das Rad sehr stark in Nachspur geht, also ein stark übersteuerndes Eigenlenkverhalten daraus resultiert. Darüber hinaus steht durch die Schräglenkerbauweise ein nur begrenzter Bauraum zwischen den beiden Rädern zu Verfügung.

Der Erfindung liegt die Aufgabe zugrunde, eine Hinterachse der im Oberbegriff des Patentanspruches 1 beschriebenen Art zu schaffen, welche unter Seitenkrafteinfluß ein neutrales oder untersteuerndes Eigenlenkverhalten aufweist, aber dennoch einfach aufgebaut und damit einfach zu fertigen und zu montieren ist und mit welcher zusätzlich noch Bauraum zwischen den beiden Längslenkern gewonnen werden kann.

Die Aufgabe wird erfindungsgemäß durch die kennzeichnenden Merkmale des Hauptanspruches gelöst.

Dadurch, daß Längslenker und Stützstrebe starr miteinander verbunden sind und somit ein Bauteil bilden können, kann letzteres auf relativ kostengünstige Art und Weise z.B. durch Gießen oder Schweißen hergestellt werden. Ferner kann auf eine die beiden Lenker verbindende torsionsweiche Querstrebe, an welcher die Stützstrebe angelenkt sein muß, verzichtet werden, wodurch weiter Bauraum eingespart wird. Die Federung des Aufbaus kann z.B. über am Lenker in einem Abstand zum Lenkerlager abgestützte Schraubenfedern erfolgen. Dadurch, daß der lagerseitige Bereich des Lenkers in Richtung Fahrzeugaußenseite verbreitert ausgebildet und die Stützstrebe auf der der Fahrzeugaußenseite zugewandten Seite des Lenkers angeordnet bzw. deren radnahes Ende an dem verbreiterten Bereich des Längslenkers angebunden ist, wird zusätzlicher Bauraum zwischen den beiden Lenkern eingespart. Trotz des vereinfachten und in verstärktem Maße platzsparenden Aufbaus der erfindungsgemäßen Hinterachse weist diese dennoch, je nach Neigung der Stützstrebe, ein neutrales oder untersteuerndes Eigenlenkverhalten unter Seitenkrafteinfluß auf.

Ist der Abstand der Stützstrebe zur Lenkerlängsachse im radnahen Bereich gleich groß wie deren Abstand im Bereich der Lenkerlagerung zur Längslenkerlängsachse (Anspruch 2), so ist unter Seitenkrafteinfluß ein neutrales Eigenlenkverhalten gegeben. Ein untersteuerndes Eigenlenkverhalten unter Seitenkrafteinfluß (kurvenäußeres Rad geht in Vorspur) wird dann erreicht, wenn, wie mit Anspruch 3 aufgezeigt, der Abstand der Stützstrebe zur Lenkerlängsachse im radnahen Bereich geringer ist als im Bereich des Lenkerlagers.

In der Zeichnung ist die Erfindung anhand eines Ausführungsbeispieles näher erläutert. Im einzelnen zeigt in Form von Prinzipdarstellungen
- Fig. 1: ein Ausführungsbeispiel einer erfindungsgemäßen Hinterachse in einer ausschnittsweisen Draufsicht und
- Fig. 2: anhand einer Prinzipskizze das elastokinematische Verhalten des in Figur 1 mit 1 bezeichneten Längslenkers unter Einfluß einer Seitenkraft.

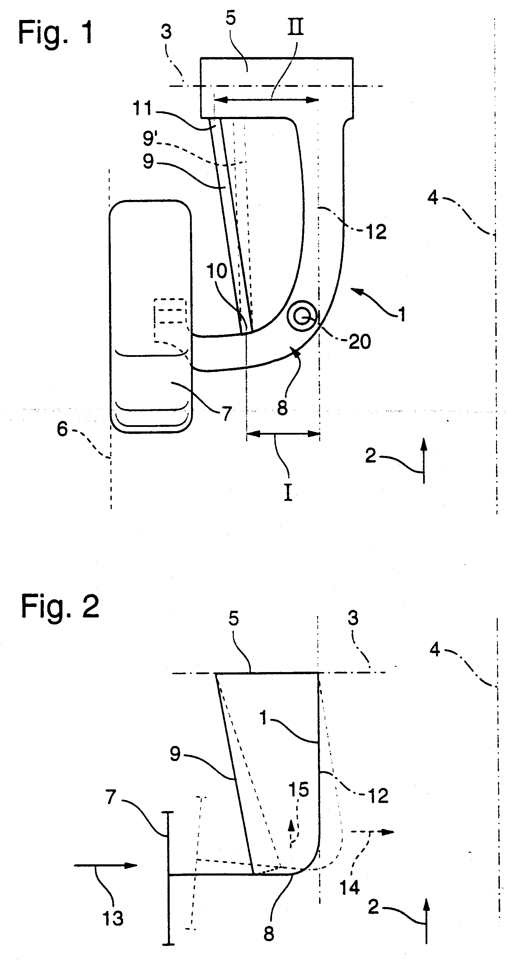

Figur 1 zeigt in einer Draufsicht einen als Längslenker 1 ausgebildeten Lenker einer Hinterachse eines Kraftfahrzeuges, welcher sich entgegen der Vorwärtsfahrtrichtung (die Vorwärtsfahrtrichtung des Fahrzeuges ist durch den Pfeil 2 dargestellt) erstreckt und um eine normal (senkrecht) zur Fahrzeuglängsmittelebene 4 verlaufende Achse 3 drehbar am Fahrzeugaufbau angelenkt ist (Längslenkerlager 5). Der Einfachheit halber ist von der Hinterachse nur ein Längslenker 1 und zwar der in Vorwärtsfahrtrichtung links von der Fahrzeuglängsmittelebene 4 angeordnete Längslenker dargestellt. Auf der anderen Seite der Fahrzeuglängsmittelebene 4 liegen spiegelverkehrte Verhältnisse vor. Der Längslenker 1 ist auf der dem Längslenkerlager 5 abgewandten Seite in Richtung Fahrzeugaußenseite 6 gebogen ausgebildet, wobei an seinem dem Längslenkerlager 5 abgewandten Ende ein Rad 7 gelagert ist. In dem gebogenen Bereich 8 ist auf dem Längslenker 1 eine Abstützeinrichtung 20 für eine den Fahrzeugaufbau federnde, in der Zeichnung der Übersichtlichkeit wegen nicht dargestellte Tragfeder (Schraubenfeder) angeformt. Selbstverständlich kann die Federung des Fahrzeuges anstelle mittels Schraubenfedern auch mittels Drehstäbe erfolgen.
Im Bereich des Längslenkerlagers 5 ist der Längslenker 1 in Richtung Fahrzeugaußenseite 6 verbreitert ausgebildet. Zur Versteifung des Längslenkers 1 ist eine Stützstrebe 9 vorgesehen, welche mit dem Längslenker 1 starr verbunden ist und zwar an ihrem einen Ende 10 im radnahen, gebogenen Bereich und an ihrem anderen Ende 11 im Bereich des verbreitert ausgebildeten Längslenkerlagers 5. Dabei ist der Abstand zwischen der Stützstrebe 9 und der Längslenkerlängsachse 12 im radnahen Bereich (I) geringer als im Bereich des Längslenkerlagers 5 (II).

Wirkt auf die Hinterachse eine Seitenkraft (z.B. bei Kurvenfahrt) in Richtung des Pfeiles 13 (Figur 2), und wird der Längslenker 1 infolge dieser Kraft und infolge seiner Elastizität entsprechend in Richtung Fahrzeuglängsmittelebene (Pfeil 14) verformt, so wirkt die Stützstrebe 9 aufgrund dessen, daß ihr Abstand zur Längslenkerlängsachse 12 im radnahen Bereich geringer ist als im Bereich des Lenkerlagers 5, wie ein Zuganker und zieht gleichzeitig das Rad 7 über den gebogenen Teil 8 des Längslenkers 1 in Vorspur (Pfeil 15), wie dies in der Figur 2 schematisch dargestellt ist (Die gestrichelte Darstellung zeigt die Anordnung unter Seitenkrafteinfluß).
Die in der Figur 2 dargestellte Verformung des Längslenkers 1 ist der Verdeutlichung wegen stark übertrieben dargestellt. Die unter realen Bedingungen auftretenden Verformungen liegen dagegen im Bereich von nur wenigen Winkelminuten.

Längslenker 1 und Stützstrebe 9 bilden in diesem Ausführungsbeispiel ein Bauteil, welches durch Gießen hergestellt ist. Ein anderes Fertigungsverfahren ist ebenso denkbar, wobei die Stützstrebe 9 mit dem Längslenker 1 auch z.B. durch Schweißen verbunden sein kann.

In weiterer Ausgestaltung der Erfindung ist es auch möglich, die Stützstrebe derart anzuordnen, daß ihr Abstand zur Längslenkerlängsachse 12 im radnahen Bereich gleich groß ist wie im Bereich des Lenkerlagers 5 (s. gestrichelt dargestellte Stützstrebe 9' in Figur 1). In diesem Fall wird kein untersteuerndes, sondern ein neutrales Eigenlenkverhalten der Hinterachse unter Seitenkrafteinfluß erreicht.

## Patentansprüche

1. Hinterachse für ein Kraftfahrzeug mit wenigstens einem, um eine quer zur Fahrzeuglängsmittelebene verlaufende Achse drehbar am Fahrzeugaufbau angelenkten, sich entgegen der Vorwärtsfahrtrichtung erstreckenden Längslenker, an dessen dem Lenkerlager abgewandten Ende ein Rad gelagert ist und mit einer Stützstrebe, welche mit ihrem einen Ende im radnahen Bereich mit dem Lenker verbunden ist, wobei der Abstand des radnahen Endes der Stützstrebe zur Lenkerlängsachse nicht größer ist als der Abstand eines radfernen Anbindungspunktes der Stützstrebe zur Lenkerlängsachse,
**dadurch gekennzeichnet,**
daß der lagerseitige Bereich des Lenkers (1) in Richtung Fahrzeugaußenseite (6) verbreitert ausgebildet ist, daß die Stützstrebe (9) auf der der Fahrzeugaußenseite (6) zugewandten Seite des Lenkers (1) angeordnet ist, daß das radferne Ende (11) der Stützstrebe (9) an dem in Richtung Fahrzeugaußenseite (6) verbreitert ausgebildeten, lagerseitigen Bereich des Lenkers (1) angebunden ist, wobei die beiden Enden der Stützstrebe (9) mit dem Lenker (1) starr verbunden sind.

2. Hinterachse nach Anspruch 1,
**dadurch gekennzeichnet,**
daß der Abstand (I) der Stützstrebe (9) zur Lenkerlängsachse (12) im radnahen Bereich gleich dem Abstand (II) der Stützstrebe (9) zur Lenkerlängsachse (12) im radfernen Bereich ist.

3. Hinterachse nach Anspruch 1 oder 2,
**dadurch gekennzeichnet,**
daß der Abstand (I) der Stützstrebe (9) zur Lenkerlängsachse (12) im radnahen Bereich kleiner ist als der Abstand (II) der Stützstrebe (9) zur Lenkerlängsachse (12) im radfernen Bereich.

## Claims

1. A rear axle for a motor vehicle with at least one suspension link which is linked to the bodywork, which rotates about an axle running at right angles to the central longitudinal plane of the motor vehicle and which extends in the direction of the forward motion of the vehicle, connected to the end facing away from the suspension arm of which by means of a bearing is a wheel, and with a supporting strut, one end of which is connected to the suspension link near the wheel, whereby the distance between the end of the supporting strut near the wheel and the longitudinal axis of the suspension link is no greater than the distance between a connecting point on the supporting strut away from the wheel and the longitudinal axis of the suspension link,
**characterised in that** the bearing side of the suspension link (1) towards the outside of the vehicle (6) is widened, that the supporting strut (9) is positioned on the side of the suspension link (1) facing the outside of the vehicle and that the end (11) of the supporting strut (9) away from the wheel is linked to the widened part of the suspension arm (1) on the side of the bearing towards the outside of the vehicle, whereby the two ends of the supporting strut (9) are connected rigidly to the suspension link (1).

2. A rear axle in accordance with Claim 1,
**characterised in that** the distance (I) between the supporting strut (9) and the longitudinal axis of the suspension link (12) near the wheel is the same as the distance (II) between the supporting strut (9) and the longitudinal axle of the suspension link (12) away from the wheel.

3. A rear axle in accordance with Claim 1 or 2,
**characterised in that** the distance (I) between the supporting strut (9) and the longitudinal axle of the suspension link (12) near the wheel is smaller than the distance (II) between the supporting strut (9) and the longitudinal axle of the suspension link (12) away from the wheel.

## Revendications

1. Essieu arrière pour un véhicule automobile comportant au moins un bras oscillant longitudinal, qui est articulé sur la carrosserie du véhicule de manière à pouvoir tourner autour d'un axe disposé transversalement par rapport au plan médian longitudinal du véhicule et qui s'étend en sens opposé de la direction de marche avant, et dans lequel une roue est montée sur l'extrémité du bras oscillant longitudinal, qui est située à l'opposé du support de ce bras oscillant, et comportant une jambe de force, qui est reliée par l'une de ses extrémités au bras oscillant, dans la zone proche de la roue, la distance entre l'extrémité, proche de la roue, de la jambe de force et l'axe longitudinal du bras oscillant n'étant pas supérieure à la distance entre le point, éloigné de la roue, de liaison de la jambe de force à l'axe longitudinal du bras oscillant,
caractérisé en ce
que la partie, située côté support, du bras oscillant (1) est agencée avec une forme élargie en direction du côté extérieur (6) du véhicule, que la jambe de force (9) est disposée sur le côté du bras oscillant (1), qui est tourné vers le côté extérieur (6) du véhicule, que l'extrémité (11), éloignée de la roue, de la jambe de force (9) est raccordée à la partie du bras oscillant (1), qui est situé côté support et est agencée, avec une configuration élargie en direction du côté extérieur (6) du véhicule, les deux extrémités de la jambe de force (9) étant reliées rigidement au bras oscillant (1).

2. Essieu arrière selon la revendication 1,
caractérisé en ce que la distance (I) entre la jambe de force (9) et l'axe longitudinal (12) du bras oscillant dans la zone proche de la roue est égale à la distance (II) entre la jambe de force (9) et l'axe longitudinal (12) du bras oscillant, dans la zone éloignée de la roue.

3. Essieu arrière selon la revendication 1 ou 2,
caractérisé en ce que la distance (I) entre la jambe de force (9) et l'axe longitudinal (II) du bras oscillant dans la zone proche de la roue est inférieure à la distance (II) entre la jambe de force (9) et l'axe longitudinal (12) du bras oscillant dans la zone éloignée de la roue.
